# EUROPEAN PATENT SPECIFICATION

(11) **EP 2 780 292 B1**
(45) Date of publication and mention of the grant of the patent: **05.04.2017**
(21) Application number: 12848791.5
(22) Date of filing: 15.11.2012
(51) Int. Cl.: C03B 33/02, C03B 33/09, B23K 26/38, B24B 9/10, C03B 33/033, C03B 33/03, C03B 33/023, B65H 20/02, B65H 18/10

(54) **APPARATUS AND METHOD FOR TRIMMING GLASS SHEETS**
VORRICHTUNG UND VERFAHREN ZUM SCHNEIDEN VON GLASSCHEIBEN
APPAREIL ET PROCÉDÉ DU COUPAGE DE FEUILLES DE VERRE

(30) Priority: 18.11.2011 US 201161561484 P
(43) Date of publication of application: 24.09.2014
(73) Proprietor: Corning Incorporated, Corning, New York 14831 (US)
(72) Inventor: MARSHALL, Dale Charles, Brockport, New York 14420 (US); MERZ, Gary Edward, Rochester, New York 14610 (US); RHOADS, Christopher Michael, Seattle, Washington 98133 (US)
(74) Representative: Greene, Simon Kenneth
(86) International application number: PCT/US2012/065235
(87) International publication number: WO 2013/074760

(56) References cited:
- EP-A1- 0 270 897
- GB-A- 1 040 514
- JP-A- 2011 121 791
- JP-A- 2011 219 338
- US-A- 1 895 779
- US-A- 1 930 582
- US-A- 3 239 402
- US-A- 3 744 690
- US-A- 4 049 167
- US-A- 4 227 635
- US-A- 4 948 025
- US-A1- 2005 178 159
- US-A1- 2006 191 970
- US-A1- 2007 169 849
- US-A1- 2009 050 661
- US-A1- 2010 107 848
- US-A1- 2011 277 507
- US-B1- 6 502 423

## Description

### FIELD

The disclosure relates generally to the trimming of a flexible brittle substrate and more particularly to trimming the edge of a flexible brittle substrate for use in a continuous or a roll-to-roll process.

### BACKGROUND

Flexible brittle substrates, such as substrates used in the manufacture of display devices, are normally processed in sheet form. Such processing can include, for example, the deposition of thin film electronics onto the substrate. Sheet form handling slows processing, since sheets must be individually transported, fixtured, processed and removed. While continuous processing of flexible brittle substrates in ribbon form promises to speed manufacturing, it brings with it new problems. For example, if a ribbon breaks, processing machinery is typically shut down, cleaned of debris and manually re-threaded with the ribbon, resulting in a loss of valuable time and raw materials. Further, the leading edge of the flexible brittle substrate where the break occurred is likely not in a condition to be immediately re-threaded after the break and would require further finishing.

EP 0 270 897 teaches a method an apparatus for shearing glass along a cut. A line of cut is heated to its softening temperature and a blade used to cut the glass along the heated line. US 6,502,423 teaches a method for cutting glass panes from a glass band drawn from a hot forming device. Cutting may be achieved using a laser beam.

### SUMMARY

Continuous processing of thin glass ribbon is a relatively new field. For example, the glass ribbon may have a thickness in a range from about 50 microns to about 200 microns. In other embodiments, the thickness is in a range of about 50 microns to about 300 microns. In processes typical to flat panel displays, silicon wafers, and other brittle materials, the product is typically handled in sheet form. The benefit for a thin glass substrate is that the flexibility afforded by the thin ribbon allows it to be used in processes utilizing rolls of the material. Although manufacturing processes for thin, flexible ribbon products are continuous, it is necessary to transport them in discrete form, typically on spools. One desirable feature for a continuous manufacturing line is the ability to slit the ribbon or web to dispose of edge anomalies. Embodiments described herein allow for the in-body initiation of a cut for thread up as well as the diversion of the quality portion of a ribbon of brittle material to downstream processing.

Accordingly, an apparatus for trimming a moving glass ribbon is disclosed comprising a quality portion and an edge portion adjacent to the quality portion, the apparatus comprising a support body for supporting the moving glass ribbon, the support body comprising an upper surface defining a plurality of orifices for emitting a gas. The emitted gas produces a gas layer between the upper surface of the support body and the glass ribbon that supports, or levitates, the glass ribbon over the upper surface, thereby preventing contact between the upper surface and the glass ribbon. The support body may comprise an arcuate upper surface, or in some embodiments only a portion of the upper surface may be arcuate.

The apparatus further comprises a cutting device configured to separate the edge portion from the quality portion of the moving glass ribbon, the quality portion traveling along a first path after the separation. The first path may, for example, lead to further processing steps. The cutting device may comprise a first scoring device, a laser and a fluid nozzle configured to emit a cooling fluid. The first scoring device may, for example, comprise a roller including an abrasive material deposited on a surface thereof. Preferably, the abrasive material is deposited as a curved (e.g. helical) line on the surface of the roller. However, in some embodiments the abrasive material may be deposited on the surface of the roller in other configurations, such as in lines parallel with a rotational axis of the roller.

The apparatus is further provided with a bypass apparatus configured to guide the edge portion that has been separated from the quality portion along a second path that is different from the first path, the edge portion remaining connected to the moving glass ribbon. That is, the edge portion, after being separated from the quality portion by the cutting device, comprises a free end removed from the quality portion of the glass ribbon, while another, opposite end of the edge portion remains attached to the glass ribbon. Relative movement between the separated edge portion and the quality portion may cause contact between the newly-formed edges thereof. This contact can damage the edge of the quality portion. Thus the free end of the glass ribbon follows a separate path from the quality portion it was separated from, and may be discarded, or collected for future use as cullet. In spite of the thinness of the glass ribbon in a direction perpendicular to the major surfaces of the glass ribbon, the "thickness" of the glass ribbon in a width-wise direction (perpendicular to a longitudinal axis of the glass ribbon) is the same as the width (a 10 cm wide glass ribbon has an edge-to-edge thickness of 10 cm), which makes in-plane bending of the ribbon, or portions thereof difficult if not impossible without fracturing the ribbon. However, the thinness of the ribbon (thickness or perpendicular distance between the major surfaces of the glass ribbon) allows the glass ribbon, or portions thereof, to be flexed or bent relatively easily in a direction out of the plane of the glass ribbon. Consequently, the second path taken by the edge portion is preferably a path that takes the edge portion out of the plane represented by the quality portion. As an example, if the first path followed by the quality portion is in a horizontal direction, the edge portion is redirected along a path that includes a direction above or below the plane of the quality portion (the edge portion is directed upward or downward, wherein the upward or downward second path is preferably an arcuate path having a bend radius insufficient to cause fracture of the edge portion).

The apparatus further includes a cross scoring device arranged to form a cross score in the quality portion in a direction perpendicular to a direction of travel of the quality portion as the quality portions travels along the first path, and a breaking apparatus configured to produce a tensile stress across the score. After the edge portions are separated from the quality portion of the glass ribbon and are being directed along a second path separate path from the first path of the quality portion, a scored is produced across at least a portion of a width of the quality portion. In one embodiment the cross scoring device comprises a swing arm, a motor coupled to a first end of the swing arm and a scoring element coupled to a second end of the swing arm, and wherein when the motor is activated the swing arm moves the scoring element through an arc perpendicular to the direction of travel. The scoring element contacts the glass ribbon at or near the top dead center of the arc and produces the cross score.

To provide for a relatively smooth, perpendicular leading free end to the moving quality portion, the apparatus also includes a breaking apparatus for extending the cross score and removing a leading end of the quality portion. The breaking apparatus may comprise, for example, a plurality of bending rollers, each bending roller of the plurality of bending rollers having a longitudinal rotational axis, and wherein each of the longitudinal rotational axes is parallel with longitudinal rotational axes of the other bending rollers and
perpendicular to the direction of travel of the quality portion. The longitudinal rotational axes of the bending rollers are preferably parallel with the cross score.

The apparatus may further comprise a platform for supporting the quality portion along the first path, the platform positioned downstream of the support body relative to the direction of travel of the moving glass ribbon (e.g. the quality portion) and comprising a plurality of orifices for emitting a gas that supports the glass ribbon. The platform may be moveable. For example, the platform may be movable in an up or down direction, in a lateral, side direction or both such that the platform can be cleared from a position that interferes with movement or set up of the glass ribbon.

The apparatus may further be provided with a taping apparatus for applying a tape to an edge of the quality portion. The tape may rolled over and pressed to portions of the quality portion after the edge portions are separated so that the newly-formed edges of the quality portion are afforded mechanical protected. The tape may also provide a handling surface for further handling of the quality portion, and provide for winding of the quality portion on a spool without direct contact between the exposed glass surfaces of the quality portion when wound on the spool.

In another embodiment, a method for trimming a moving glass ribbon is described comprising a quality portion and an edge portion, the method comprising the steps of: supplying the moving glass ribbon to a trimming apparatus, the moving glass ribbon moving through the trimming apparatus along a first path; supporting the moving glass ribbon over a support body having an upper surface defining a plurality of orifices from which a gas is emitted that levitates the glass ribbon over the upper surface. The upper surface preferably comprises an arcuate portion. The moving glass ribbon may, in come cases, be supplied from a glass forming apparatus. The glass forming apparatus maybe a fusion draw apparatus, a slot draw apparatus or a redraw apparatus. In other embodiments, the glass ribbon may be supplied from a supply spool.

Once the glass ribbon is supported by the support body, a crack is then formed in the moving glass ribbon, the crack propagating through a thickness of the moving glass ribbon in a direction opposite a direction of travel of the moving glass ribbon to separate the edge portion from the moving glass ribbon. The crack is spaced a predetermined distance from an edge of the moving glass ribbon. For example, the crack may be spaced at least about 2 cm from the nearest edge of the glass ribbon. However, the distance the crack may be spaced from the nearest edge depends on such factors as the width of the glass ribbon and the size of the bead contained by the edge portion. The edge portion is then diverted along a second path different from the first path as the crack propagates along a length of the glass ribbon, and wherein the edge portion remains attached to the glass ribbon as the as the edge portion is diverted. Preferably, the edge portion is not adjacent to the central quality region of the glass ribbon over substantially the entire length of the edge portion.

Forming the crack may include forming a score spaced apart from the edge, intersecting the score with a laser beam to heat a region of the glass ribbon, contacting the heated region of the glass region with a cooling fluid that causes a crack to propagate and wherein the propagating crack does not intersect a leading edge of the glass ribbon.

The method may further comprise removing the leading edge by fracturing the glass ribbon, wherein the fracture intersects the propagating crack, thereby releasing a portion of the edge portion from the glass ribbon.

The method may further comprise forming a cross score in the glass ribbon that is perpendicular to the direction of travel of the moving glass ribbon.

The method may further comprise bending the glass ribbon to extend the cross score through the thickness of the moving glass ribbon.

In some embodiments the method may include applying an edge tape to a quality portion of the glass ribbon.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary, and are intended to provide an overview or framework to understand the nature and character of the claims.

The accompanying drawings are included to provide a further understanding, and are incorporated in and constitute a part of this specification. The drawings illustrate one or more embodiment, and together with the description serve to explain principles and operation of the various embodiments.

### BRIEF DESCRIPTION OF THE DRAWINGS

FIG. 1 is schematic drawing of an apparatus for removing edge portions from a flexible ribbon of glass being conveyed through the apparatus;
FIG. 2 is a perspective view of a portion of the apparatus of FIG. 1 showing a close up view of the support body and cutting device;
FIG. 3 is a perspective view of a portion of the apparatus of FIG. 1 showing a close up view of the cutting device;
FIG. 4 is a perspective view of a roller for scoring the glass ribbon;
FIG. 5 is a front view of a cross scoring device;
FIG. 6 is a side view of a breaking device for applying a tensile stress across a cross score formed, for example, by the cross scoring device of FIG. 5;
FIG. 7 is a perspective view of a taping apparatus for taping edges of a quality portion of the glass ribbon;
FIG. 8 is a side view of a take up spool on which is wound the quality portion of a glass ribbon after separation of the edge portions;
FIGS. 9A - 9F are a series of top views of an end of the glass ribbon illustrating various stages of the trimming of edge portions from the quality portion of a glass ribbon by the apparatus of FIG. 1.

### DETAILED DESCRIPTION

In the following detailed description, for purposes of explanation and not limitation, example embodiments disclosing specific details are set forth to provide a thorough understanding of the present invention. However, it will be apparent to one having ordinary skill in the art, having had the benefit of the present disclosure, that the present invention may be practiced in other embodiments that depart from the specific details disclosed herein. Moreover, descriptions of well-known devices, methods and materials may be omitted so as not to obscure the description of the present invention. Finally, wherever applicable, like reference numerals refer to like elements.

By their nature brittle materials are incapable of absorbing significant energy without damage, and most particularly fracture. However, if the brittle material is sufficiently thin, and a bending radius is sufficiently large, thin webs or ribbons of brittle material can be rolled, which provides the opportunity to process the ribbon in a so-called roll-to-roll process. In a typical roll-to-roll process, the material on one roll, the source roll, may be unwound, optionally passed through appropriate processing equipment, then rewound onto a take-up roll. Indeed, the roll-to-roll concept can be expanded to a manufacturing process for the material itself, wherein a production apparatus produces the ribbon of material in a continuous process, and the resulting ribbon is wound onto a receiving roll that becomes the source roll for subsequent processes. Alternatively, the ribbon may be further processed intermediate between the ribbon production and the receiving or take up roll. For the purposes of further discussion, this latter concept will be termed a manufacture-to-roll process, and more generically, processes that involve spooling of thin brittle webs or ribbons onto a roll will be termed roll processes.

One brittle material of particular interest is glass, such as glass suitable for use in display devices or other electronic devices. Such roll processes as described above can significantly increase the technical and economic advantages of glass substrates for uses such as flexible displays. For example, glass substrates are hermetic, and can provide protection for sensitive electronic and/or photonic devices that are susceptible to damage from exposure to oxygen and moisture, e.g. organic light emitting diodes, without the need for barrier layers deposited on the substrate. Thus, the ability to process glass substrates in ribbon form is an attractive alternative to piecemeal processing where individual glass sheets are handled one at a time. However, the processing of a ribbon of brittle material such as glass is complicated by not only the brittle nature of the material but artifacts of the initial manufacturing process.

Thin glass ribbons of high quality can be produced by several methods. For example, in a fusion process, a molten glass forming material is supplied to an open channel in a forming body. The molten glass forming material overflows the channel and flows over converging exterior forming surfaces of the forming body as separate flows. These separate flows rejoin at the base of the forming body where the forming surfaces converge to form a ribbon that descends from the bottom of the forming body. As the ribbon descends, the flow off the forming body and surface tension effects, among others, work to narrow the ribbon, resulting in thickened edges called beads. Other processes include the slot draw process, where the molten glass forming material is drawn from a slot at the bottom of a forming vessel, and the redraw process where a relatively thick glass plate is reheated to a softening temperature of the material. In the redraw process, the melted material pulls away from the original glass plate and thins as it flows downward from the plate. While the preceding exemplary processes illustrate different approaches to producing a thin ribbon of glass, they have in common the drawing of a viscous stream of material resulting in thickened regions or beads. Eventually these beads must be removed, either to facilitate roll processing itself, or to accommodate downstream processing or final product design.

Another challenge to roll processing of brittle materials, such as a glass ribbon, is the interruption caused if the ribbon breaks. That is, a fracture of the ribbon as the ribbon is moving likely results in a need to halt the process. For example, the take up spool may need to be replaced with a new spool, and at a minimum, the ribbon may require re-threading through the apparatus performing the processing. Moreover, the unpredictable break path more likely than not results in an irregular, if not jagged, free end that is more desirably "squared off" prior to restarting the process. Thus, finishing the free end may be necessary. This, and the preceding challenge being the case, it is desirable to perform such functions as trimming the beads and/or finishing the free end of the glass ribbon in-line as the process progresses.

Unlike the processing of a non-brittle web or ribbon of material, such as plastic film, where material removal can be initiated by simply starting a slit in the material as it travels below a blade, initiating bead removal on a ribbon of brittle material such as glass poses unique difficulties. Although bead removal is most easily initiated from an exposed edge of the ribbon, such as from the free or leading end of the ribbon, this is not always possible. For example, in the instance were the ribbon fails while traveling (in-process failure) the leading end of the ribbon will likely require finishing and re-threading. And, while the slit for bead removal can be initiated in-body (away from an edge) at any point along the ribbon, this leaves the ribbon and the removed bead attached downstream of the cutting process. It is possible to cross cut the beaded area and divert the new leading edges into a cullet chute for disposal, but the force of cutting the thickened bead may affect the quality of the slit upstream in the process. Consequently, it is desirable to cross cut the thin quality area of the glass ribbon and transport this leading edge onward to the next step of the process while diverting the beads. Accordingly, methods and apparatuses that can initiate in-body cutting of a glass ribbon are presented herein. Although the present description is written in the context of flexible glass ribbons, it is understood that these methods and apparatuses can be applied to other flexible brittle and such materials are included in the term flexible glass ribbon.

As used herein the term "edge" will refer to an outermost lateral position on the glass ribbon along a length of the ribbon, whereas "edge portion" will refer to a longitudinal strip of glass material along a length of the glass ribbon. The edge portion includes the bead referred to above. Thus, a ribbon of glass comprises two edge portions extending along a length of the glass ribbon, each edge portion having a predetermined width less than one half the width of the glass ribbon such that the edge portions bound an interior or central region of the glass ribbon referred to as the quality portion. It is the quality portion of the glass ribbon that may be provided to purchasers and should be protected from damaging contact.

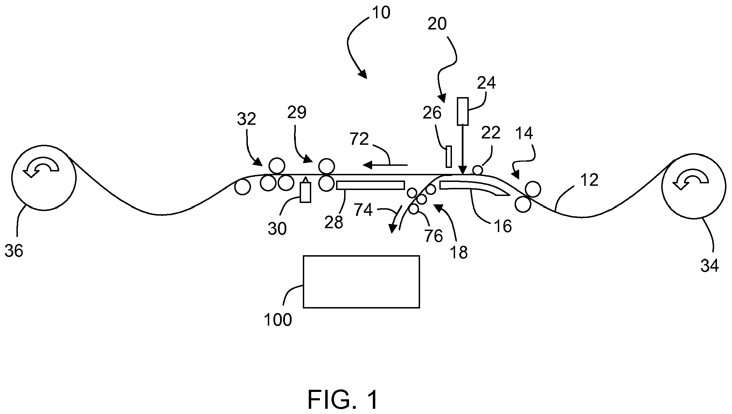

Referring to Fig. 1, an apparatus 10 for conveying and removing an edge portion from thin, flexible glass ribbon 12 is depicted. Apparatus 10 comprises a first drive apparatus 14, support body 16, a bypass mechanism 18, and a cutting device 20 comprising first scribing device 22, laser source 24 and fluid nozzle 26. Apparatus 10 may optionally also include platform 28, optional second drive apparatus 29, second or cross scoring device 30, and breaking apparatus 32. Apparatus 10 may be used in conjunction with supply spool 34 and take-up spool 36.

In the embodiment of FIG. 1, first drive apparatus 14 comprises at least one set of opposing, counter-rotating rollers that pinch the glass ribbon therebetween. Preferably, first drive apparatus 14 comprises at least two pair of counter-rotating rollers. The counter-rotating rollers pull the glass ribbon from supply spool 34 and feed the glass ribbon over support body 16. It should be noted that other suitable drive apparatuses may be substituted. For example, the opposing, counter-rotating belts may be employed. However, it is further noted that regardless the method of moving glass ribbon 12, it is desirable that the central quality portion of the glass ribbon not be contacted by the drive apparatus to prevent damage to the quality portion. Therefore, first drive apparatus 14 preferably contacts glass ribbon 12 only at the edge portions.

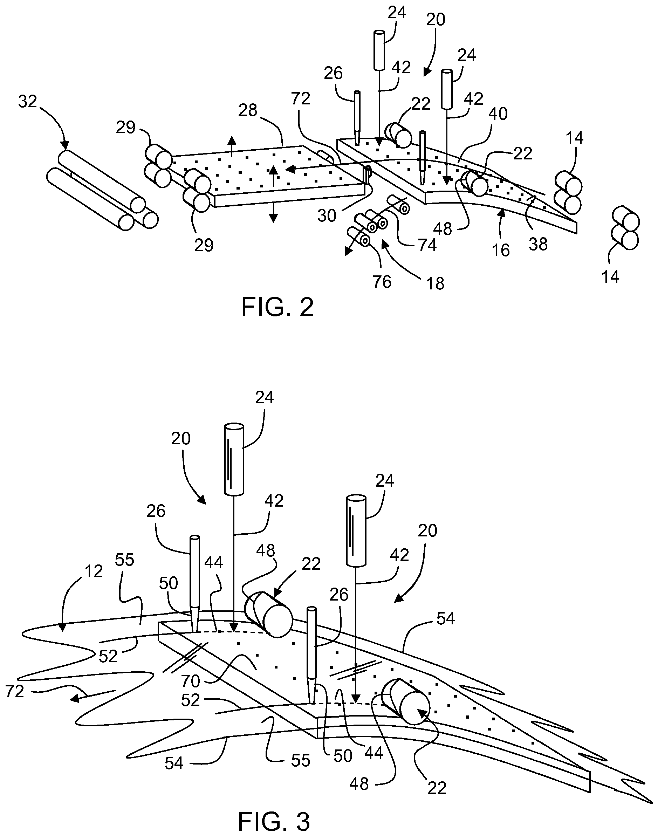

As best seen in FIG. 2, support body 16 comprises an upper surface 38 defining a plurality of orifices 40. Preferably, upper surface 38 is at least partially arcuate. This is desirable because the glass ribbon is preferably unsupported between at least supply spool 34 and first drive apparatus 14, and therefore conforms to a catenary. The catenary serves as an accumulator wherein the slack length aids in smooth delivery of the glass ribbon from the supply spool without jerking. To prevent contact between the glass ribbon and the support body that may damage the glass ribbon, support body 16 may comprise, for example, an air bearing. A gas is supplied to and expelled from orifices 40, which orifices are in fluid communication with a source of the gas (not shown). The expelled gas forms a gas film beneath the moving glass ribbon that levitates the glass ribbon above upper surface 38. For example, support body 16 may comprise a closed interior plenum positioned beneath upper surface 38 and which interior plenum is supplied with a gas (e.g. air) from gas source such as a compressor or gas bottle. Alternatively, the orifices may be individually supplied with gas from the source, e.g. through separate piping that leads from a central manifold. The distance between the glass ribbon and the upper surface of the support body while the glass ribbon is levitated, termed the fly height, can be adjusted, for example, by adjusting the flow of the gas supplied to the orifices.

As noted above and in reference to FIGS. 2 - 4, cutting device 20 comprises first scribing device 22, laser source 24 and fluid nozzle 26. Preferably, cutting device 20 includes a pair of each of these components so that there are at least two first scribing devices 22, at least two laser sources 24 and at least two fluid nozzles 26. As typically each device of a pair of devices is identical to the other device of the pair, only one device of a pair of devices will be described, with the understanding that, unless otherwise noted, the second device of any pair of devices is as described in respect of the first device of the pair.

In operation, first scribing device 22 produces an initial flaw in the moving glass ribbon, wherein the initial flaw is preferably formed in the edge portion of the ribbon. Subsequently, this flaw is intersected by laser beam 42 originating from laser source 24 that heats a narrow path or region (represented by dashed line 44) of the glass ribbon that intersects the flaw. Laser source 24 is selected so that a wavelength of laser beam 42 produced by the laser source is absorbed by the glass ribbon. For example, a CO₂ laser source is suitable for heating the glass ribbon when the glass ribbon is an aluminoborosilicate glass. Other glass compositions may require a laser source emitting at a different wavelength.

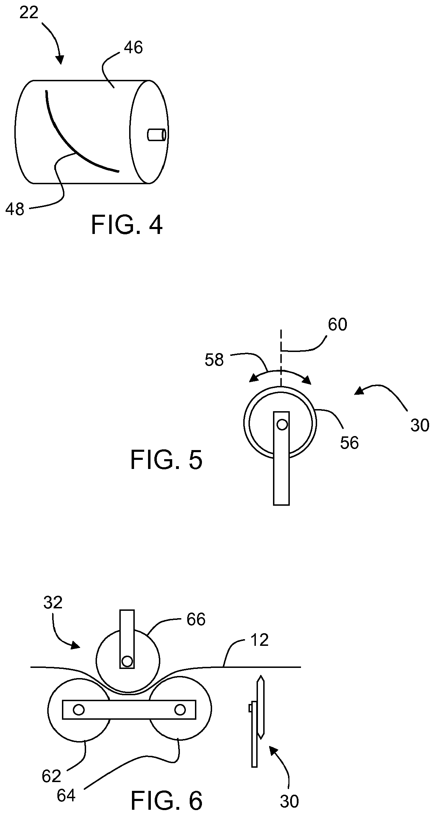

As best shown in the embodiment of FIG. 4, first scribing device 22 comprises a roller 46 having one or more arrayed lines of an abrasive material 48 that produce a plurality of flaws in a surface of the edge portion. The lines of abrasive material may be straight, or the lines of abrasive material may be curved (e.g. helical). Roller 46 may, for example, have a rotational speed such that at the point of contact between the roller and the glass ribbon, the tangential speed of the roller and the forward movement of the glass ribbon are the same or substantially the same. For example, roller 46 may be rotationally undriven and free wheeling. It is not necessary that roller 46 be in contact with glass ribbon 12 at all times. Therefore, in some embodiments, roller 46 may be configured to translatable so that the roller can be extended toward or retracted away from glass ribbon 12.

Abrasive material 48 may comprise, for example, an abrasive grit that is adhered to the surface of the roller and which abrasive grit extends above the surface of the roller. The one or more lines of abrasive material positioned on the surface of roller 46 produce a wide flaw region within the edge portion of the glass ribbon that reduces the precision alignment needed for the impinging laser beam. That is, as the glass ribbon 12 traverses apparatus 10, the glass ribbon may exhibit some side-to-side movement. If a single flaw was to be introduced, such as with a pointed scribe, precise positioning of the ribbon would be required to ensure laser beam 42 intersected the flaw. By introducing a region of flaws that extends in a width-wise direction across a portion of the glass ribbon width, the need for precise positioning of the laser beam in respect of the flaw or flaws is mitigated.

Next, the narrow heated region 44 of the glass ribbon produced by laser beam 42 is contacted with cooling fluid 50 issuing from fluid nozzle 26. The cooling fluid may be a liquid (e.g. water), a gas (e.g. air) or a mixture thereof. For example, cooling fluid 50 may be an air-water mist. The thermal stress induced into the glass ribbon along heated region 44 of the glass ribbon when quenched with the cooling fluid causes a crack 52 form at the initial flaw. Crack 52 propagates through the thickness of the glass ribbon and longitudinally along the glass ribbon substantially parallel with edge 54 of the ribbon, as illustrated in FIG. 3. The crack forms a separation of edge portion 55 from the interior quality portion of the glass ribbon.

By employing a pair of cutting devices 20, separation between both edge portions of the glass ribbon and the quality portion of the glass ribbon can be induced (as used herein separation should be construed to mean a crack that extends through the entire thickness of the glass ribbon). Advantageously, this separation can be induced without the need to originate the separation from an edge of the glass ribbon. Rather, the separation can be induced from an interior of the glass ribbon, spaced apart from an edge (i.e. in-body separation). In other words, a slit is formed in the body of the glass ribbon.

Returning to FIG. 2, apparatus 10 may optionally include platform 28. Preferably, platform 28 is similar to support body 16 in that platform 28 comprises orifices for receiving and expelling a gas that levitates the glass ribbon above an upper surface of the platform. Platform 28 is preferably movable so that platform 28 can be raised or lowered as needed. Alternatively, or additionally, platform 28 may be configured to also move laterally in a direction parallel with an upper surface of the platform. Movement of platform 28 can facilitate removing platform 28 from a path of the glass ribbon so that the glass ribbon, if need be, can be directed away from a path of the glass ribbon, such as to a disposal receptacle, without interference. Movement of platform 28 may be desired, for example, during initial start-up of apparatus 10 until stable operation is attained, at which time the platform can be returned to its normal operational position beneath the glass ribbon to provide levitative support to the glass ribbon.

As best seen with the aid of FIGS. 2, 5 and 6, apparatus 10 also comprises a cross scoring device 30 for forming a score in the glass ribbon in a direction perpendicular to a direction of motion of the glass ribbon of the glass ribbon. Cross scoring device 30 may comprise any suitable scoring element 56 for scribing or scoring a piece of glass, and maybe, for example, an abrasive wheel, a carbide wheel, scribe or point, or other known scoring elements. As glass ribbon 12 may move through apparatus 10 quite rapidly, producing a score perpendicular to an edge of the glass ribbon across substantially the entire width of the glass ribbon would require a scribing device that not only travels in a direction perpendicular to the movement of the ribbon, but in a direction the same as the ribbon movement. This in turn requires either very fast motion of the scribing device, or an extended movement path. To overcome these obstacles, in one embodiment cross scoring device 30 is configured to swing through an arc as represented by double headed arrow 58 (see FIG. 5). When scoring element 56 is near the 12 o'clock or top dead center position, represented by dashed line 60, the scoring element contacts the glass ribbon and produces a short score in the contacted surface that extends in a direction that is perpendicular to an edge of the glass ribbon. Thus, scoring element 56 is in contact with the glass ribbon only briefly. Consequently, the length of the score can be very short, equal to or less than about a centimeter for example, and movement of the scoring device to match the forward movement of the glass ribbon is unneeded.

To ensure a cut that is substantially perpendicular to the direction of motion of the glass ribbon (and substantially perpendicular to an edge of the glass ribbon), cross scoring device 30 may be used in conjunction with a breaking apparatus that produces a tensile stress in the glass ribbon by bending the glass ribbon perpendicular to the edges 54 of the glass ribbon. In one embodiment, best seen in FIG. 6, breaking apparatus 32 comprises first roller 62, second roller 64 and third roller 66. The glass ribbon passes between first roller 62 and third roller 66, and between second roller 64 and third roller 66. When a break in the ribbon is desired, the first and second rollers 62, 64, and the third roller 66, may be moved in a direction toward each other so that the glass ribbon is forced to follow an arcuate path between the rollers. The arcuate path produces a tensile stress across the score formed by cross scoring device 30, causing the glass ribbon to break across the width of the glass ribbon. For example, first and second rollers 62, 64 may be moved in a direction toward third roller 66, or third roller 66 may be moved toward first and second rollers 62, 64, or both the first and second rollers, and the third roller, may be moved toward each other. In the embodiment illustrated in FIGS. 2 and 6, breaking apparatus 32 is arranged so that first and second rollers 62, 64 are positioned opposite or adjacent the bottom surface of the glass ribbon (the surface of the glass ribbon opposite or adjacent to support body 16), while third roller 66 is positioned opposite the top surface of glass ribbon 12. The positioning of the rollers 62, 64 and 66 is dictated by the location where the cross score is formed, so that if the cross score described supra is instead formed in the top surface of the glass ribbon, arrangement of the rollers would be reversed. That is, the rollers are configured to produce a tensile stress in that surface of the glass ribbon in which the cross score is formed, and wherein the tensile stress is formed across the cross score. A square break (a break perpendicular to the direction of travel of the glass ribbon) is produced by aligning the longitudinal axis of the first, second and third rollers of the breaking apparatus so they are perpendicular to the direction of travel of the glass ribbon.

Removal of the edge portions from the glass ribbon may include spacing the edge portions apart from the remaining quality portion of the glass ribbon. Spacing the edge portions apart from the quality portion means more than simply separating an edge portion from the quality portion, but rather entails placing enough distance between the edge portion and the quality portion so as to prevent contact between the separated edge portion and the quality portion. This is, a length of the edge portion may be separated from the quality portion but may still be immediately adjacent to the quality region such that movement of the overall glass ribbon may cause the edge portion to contact or rub against the quality portion. Such contact can result in damage to the newly-formed edges of the quality portion that can in turn serve as the flaw source for subsequent undesirable, and indeed, unanticipated, breakage of the quality portion. It should be noted that although an edge portion is separated from the quality portion, during nominal operating conditions of apparatus 10 the edge portion is still attached to the quality portion at one end of the edge portion, a situation that will become clearer further below.

Accordingly, apparatus 10 further comprises a bypass mechanism 18 that redirects edge portions 55 of the glass ribbon so the edge portions are not adjacent to quality portion 70 of the glass ribbon over substantially the entire length of the edge portion. That is, while quality portion 70 positioned between edge portions 55 continues along a first path 72, edge portions 55 follow along a second path 74 different from the first path, while still being connected to the quality portion. One embodiment of a bypass mechanism is shown in FIGS. 1 and 2. In one embodiment, bypass mechanism 18 comprises a plurality of rollers 76 that support and redirect an edge portion along a path different than the path taken by the quality portion. When cutting device 20 forms a cut (slit) running substantially parallel to an edge of the glass ribbon, one newly-formed edge of the edge portion may be separated from the quality portion while a second end of the edge portion may still be connected to the quality portion so that, in effect, the edge portion is cantilevered from the quality portion and includes a free end. The weight of the edge portion between the connected end and the free end causes the free end of the edge portion to sag downward onto the rollers 76 of bypass mechanism 18. Meanwhile, forward movement of quality portion 70 along first path 72 causes continued movement of the edge portion along the bypass mechanism, since the edge portion remains connected to the quality portion. That is, because one end of the edge portion remains connected to the quality portion, and the quality portion is moving forward through apparatus 10 along first path 72, edge portion 55 is necessarily also moved, but along second path 74. However, bypass mechanism 18 ensures edge portion 55 moves along second path 74 different that the first path followed by the quality portion. This action ensures sufficient distance between the newly formed edges of the edge portion and the edges of the quality portion that define the slit therebetween. Alternatively, bypass mechanism 18 may be implemented in other ways. For example, instead of rollers, bypass mechanism 18 may simply include a chute along which the edge portion slides, or a slot through which the edge portion is directed. Alternatively, bypass mechanism 18 may include an air bearing over which the edge portion is levitated. The relevant consideration is that the edge portion is directed by the by-pass mechanism along a second path with minimum resistance.

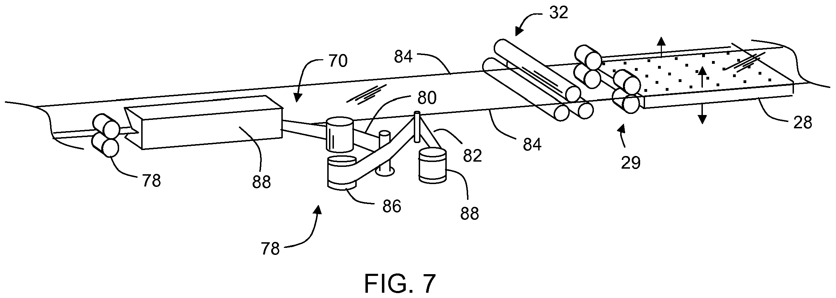

While the embodiment of apparatus 10 depicted in FIG. 1 illustrates a simple edge portion removal process, apparatus 10 may further perform other processes. For example, FIG. 7 shows taping apparatus 78 for applying an edge tape 80 to quality portion 70 of the glass ribbon once edge portions 55 have been removed. As such, and as shown, taping apparatus 78 is positioned downstream of breaking apparatus 32 and is upstream of take-up spool 36. That is, taping apparatus 78 is positioned after the edge portions are removed but before quality portion 70 of the glass ribbon has been rewound onto take-up spool 36. It should be recalled that the purpose for creating distance between an edge portion and the quality portion is to prevent contact damage to the newly-formed edges of the quality portion. Similarly, taping the newly-formed edges of the quality portion can prevent damage to the newly formed edges after removal of the ribbon edge portions and provide a handling surface for subsequent processes. Taping apparatus 78 according to the embodiment of FIG. 7 is configured to apply a tape to the quality portion. The tape, for example, may having an adhesive applied to one surface of the tape and include a backing strip 82 applied over the adhesive to prevent self-sticking. Consequently taping apparatus 78 as embodied in FIG. 7 may be configured to remove the backing strip, apply the adhesive-backed tape to the newly-formed edges 84 of quality portion 70, and fold the tape so the adhesive-backed surface is brought into contact with both sides (major surfaces) of the quality region. Similar to other aspects of apparatus 10, taping apparatus 78 is preferably duplicated so that a tape is applied to both newly-formed edges 84 of the quality region, although only a single taping apparatus is shown and described.

In accordance with FIG. 7, taping apparatus 78 comprises supply spool 86 containing a length of tape suitable for application to the quality portion of the glass ribbon, a take-up spool 87 on which is wound backing strip 82 that is removed from edge tape 80, and applicator 88 that folds the tape so that the tape is brought into contact with at least one surface of the quality portion, and preferably both surfaces of the quality portion adjacent to the side edge. Pinch roller set 90 may be used downstream (relative to the direction of motion of quality portion 70) of applicator 88 to press the folded tape to quality portion 70 and ensure good adhesion to quality portion 70.

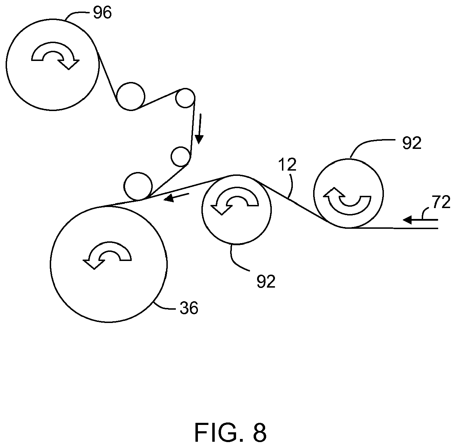

After processing, the quality portion of the glass ribbon is wound onto take-up spool 36. As best shown in FIG. 8, quality portion 70 of the glass ribbon precedes through various guide rollers 92 that position the quality portion appropriately for winding onto the take-up spool. In addition, an interleaving material 94 supplied from interleaving material supply spool 96 may be applied over a surface of quality portion 70 so that contact between successive layers of the quality portion on spool 36 do not contact and create damage to the surfaces of the quality portion. The interleaving material may be any suitable interleaving material. For example, the interleaving material may be a paper-based product, or a resilient foam-based product.

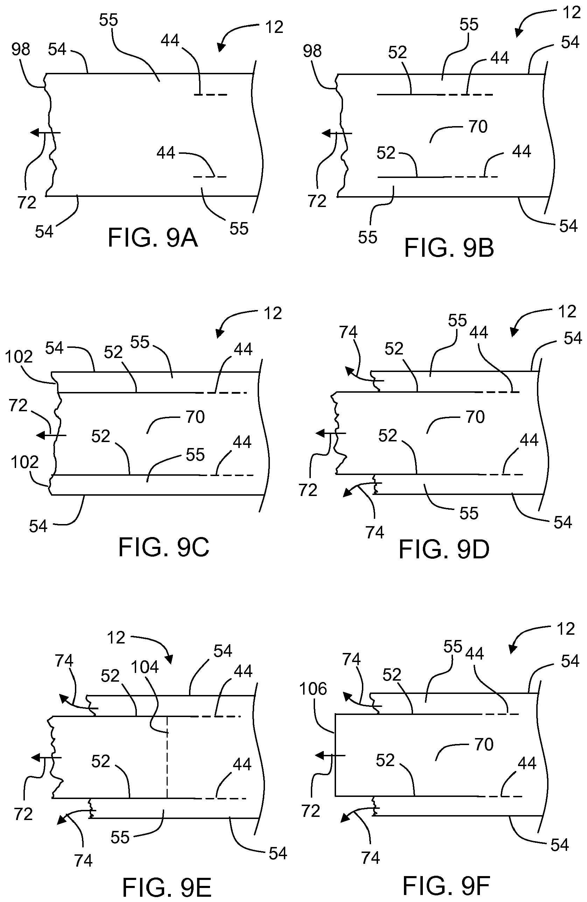

Operation of apparatus 10 will now be described with the aid of FIGS. 9A - 9F. Referring first to FIGS. 2 and 9A, the process begins when a free end 98 of a thin, flexible glass ribbon 12 is transferred from supply spool 34 to first drive apparatus 14. First drive apparatus 14 comprises two pair of opposing rollers that pinch the opposing edge portions 55 of the glass ribbon therebetween. Thus, each pair of rollers constitutes a pinching mechanism, with one pinching mechanism positioned at one longitudinal edge portion 55 of glass ribbon 12 and the other pinch mechanism positioned at the opposing side edge. Preferably, the rollers of each pinch mechanism are separable so that glass ribbon can be more easily fed between the rollers during initial set-up. Once glass ribbon 12 is positioned between the rollers of each pinch mechanism, the rollers are closed so that the glass ribbon is pinched between the respective rollers of each pinch mechanism. At least one roller of each roller pair is driven (motorized) so that rotation of the driven roller pulls the glass ribbon from the supply roll and feeds it into apparatus 10.

As free end 98 of glass ribbon 12 enters apparatus 10, the glass ribbon passes over support body 16, where gas exiting the plurality of orifices in the upper surface of the support body levitates the glass ribbon over the upper surface of the support body at a predetermined fly height. Free end 98 of the glass ribbon passes under first scribing device 22 and first scribing device 22 is lowered so that abrasive material 48 disposed on roller 46 forms a plurality of flaws on the edge portions 55 of the glass ribbon.

Referring now to FIGS. 2 and 9B, laser beam 42 emitted by laser source 24 intersects a flaw formed by first scribing device 22 and heats a narrow region 44 of the glass ribbon substantially parallel with the edge 54 of the glass ribbon. Subsequent to the heating, cooling fluid 50 emitted by fluid nozzles 26 contact the heated regions of the glass ribbon, causing cracks 52 to form that separate edge portions 55 from quality portion 70 along a length of glass ribbon 12.

As glass ribbon continues to move forward through apparatus 10, platform 28 can be lowered, allowing free end 98 of the glass ribbon to fall downward and be received into a chopping mechanism (not shown) that removes glass from the free end of the ribbon and which waste glass maybe collected in waste receptacle 100 (see FIG. 1). Eventually, free end 98 of glass ribbon 12 is removed to the point where the free end of the ribbon intersects with cracks 52, as shown in FIG. 9C, thus forming a free end 102 for each edge portion 55. As described previously, as cracks 52 lengthen with forward movement of glass ribbon 12, the edge portions 55 sag downward due to their weight, and are guided by bypass mechanisms 18 along a second path 74 different from the first path 72 taken by the quality portion 70 as illustrated in FIG. 9D. It should be noted that edge portions 55 may be actively guided by bypass mechanisms 18.

Next, because the chopping device can produce a rather ragged leading end, a square free end of the quality portion is formed. Turning to FIG. 9E, the free end of quality portion 70 is scored by cross scoring device 30. As quality portion 70 passes through the rollers of breaking apparatus 32, the rollers 62, 64 and 66 are moved closer to one another in the manner previously described so that quality portion 70 is forced through a serpentine bend that applies a tensile stress to a surface of the quality region that contains cross score 104 produced by cross scoring device 30. Referring to FIG. 9F, as the bend passes through cross scoring device 30 and breaking apparatus 32, quality portion 70 is cleaved so that a new free end 106 is formed that is substantially perpendicular to the newly-formed edges of the quality portion (formed by crack 52). Platform 28 can be raised so that the platform can levitate quality portion 70 above an upper surface thereof. Consequently, quality portion 70 is guided to downstream processes along first path 72, such as edge taping, and edge portions 55 of glass ribbon 12 are directed along a second path 74 where they can be collected and/or discarded.

In another embodiment, the glass ribbon may be supplied directly to apparatus 10 from a glass ribbon drawing apparatus rather than a supply spool. An exemplary fusion downdraw apparatus comprises a forming body having a channel formed in an upper surface thereof. The channel is supplied with a molten glass from a glass melting apparatus, wherein the molten glass overflows the channel and flows over converging forming surfaces as separate streams of molten glass. The separate streams join where the converging forming surfaces meet to form a glass ribbon that is drawn downward by gravity and pulling rollers positioned below the forming body. As the glass ribbon descends it transforms from a viscous liquid to a solid elastic material. The glass ribbon descending from the forming body may be supplied to apparatus 10 in a continuous process.

A slot draw process differs from a fusion downdraw process in that the molten glass is delivered to a reservoir comprising a slot in a lower surface thereof, wherein the molten glass descends through the slot as a glass ribbon that is pulled downward by gravity and pulling rolls.

In a redraw process, an edge of a glass sheet is reheated in a furnace, wherein the reheated glass edge exceeds the softening point of the glass and descends from the glass sheet. The descending glass is pulled downward by gravity and pulling rolls that thin the glass into a thin glass ribbon.

As each of the fusion, slot and redraw processes are well known, no further description is required or provided.

It will be apparent to those skilled in the art that various modifications and variations can be made without departing from the scope of the invention. Since modifications combinations, sub-combinations and variations of the disclosed embodiments may occur to persons skilled in the art, the invention should be construed to include everything within the scope of the appended claims .

## Claims

1. An apparatus for trimming a moving glass ribbon comprising a quality portion (70) and an edge portion (55) adjacent to the quality portion, the apparatus comprising:
a support body (16) for supporting the moving glass ribbon, the support body comprising an upper surface (38) defining a plurality of orifices for emitting a gas;
a cutting device (20) configured to separate the edge portion from a quality portion of the moving glass ribbon, the quality portion traveling along a first path after the separation; and
a bypass apparatus(18) configured to guide the separated edge portion along a second path different from the first path, the edge portion remaining connected to the moving glass ribbon;
**characterised by**:
a cross scoring device (30) arranged to form a score in the quality portion in a direction perpendicular to a direction of travel of the quality portion; and
a breaking apparatus (32) configured to produce a tensile stress across the score;
wherein the cutting device (20) comprises a first scribing device (22) comprising a roller (46) comprising arrayed lines of an abrasive material (48) that produce a plurality of flaws on the moving glass ribbon.

2. The apparatus according to claim 1, wherein the support body (16) comprises an arcuate upper surface (38).

3. The apparatus according to claim 1 or claim 2, wherein the cutting device (20) comprises a first scribing device (22), a laser (24) and a fluid nozzle (26) configured to emit a cooling fluid.

4. The apparatus according to any one of claims 1 - 3, further comprising a platform (28) for supporting the quality portion along the first path, the platform (28) positioned downstream of the support body (16) relative to the direction of travel of the moving glass ribbon and comprising a plurality of orifices for emitting a gas that supports the glass ribbon.

5. The apparatus according to any one of claims 1 - 4, further comprising a taping apparatus (78) for applying a tape (80) to an edge of the quality portion (70).

6. The apparatus according to any one of claims 1 - 5, wherein the breaking apparatus (32) comprises a plurality of bending rollers (62,64,66), each bending roller of the plurality of bending rollers having a longitudinal rotational axis, and wherein each of the longitudinal rotational axes is parallel with another longitudinal rotational axis and perpendicular to the direction of travel.

7. The apparatus according to any one of claims 1 - 6, wherein the cross scoring device comprises a swing arm, a motor coupled to a first end of the swing arm and a scoring element coupled to a second end of the swing arm, and wherein when the motor is activated the swing arm moves the scoring element through an arc perpendicular to the direction of travel.

8. A method for trimming a moving glass ribbon comprising a quality portion (70) and an edge portion (50), the method comprising the steps of:
supplying the moving glass ribbon to a trimming apparatus, the moving glass ribbon moving through the trimming apparatus along a first path;
supporting the moving glass ribbon over a support body (16) having an upper surface (38) defining a plurality of orifices from which a gas is emitted that levitates the glass ribbon over the upper surface;
contacting the edge portion (55) of the glass ribbon with a roller (46) of a scribing device (22), thereby forming a flaw region extending in a width-wise direction within the edge portion (55) of the ribbon, the flaw region comprising a plurality of flaws on the edge portion of the glass;
forming a crack (52) in the moving glass ribbon, the crack propagating through a thickness of the moving glass ribbon in a direction opposite a direction of travel of the moving glass ribbon to separate the edge portion (55) from a quality portion (70) of the moving glass ribbon, the quality portion following a first path;
diverting the edge portion (55) along a second path different from the first path as the crack propagates along a length of the glass ribbon; and
wherein the edge portion (55) remains attached to the glass ribbon as the edge portion is diverted.

9. The method according to claim 8, wherein the upper surface (38) comprises an arcuate portion.

10. The method according to claim 8 or claim 9, wherein the crack (52) is spaced a predetermined distance from an edge of the moving glass ribbon.

11. The method according to any one of claims 8 - 10, wherein forming the crack (52) comprises forming a score spaced apart from the edge, intersecting the score with a laser beam to heat a region of the glass ribbon, contacting the heated region of the glass region with a cooling fluid that causes a crack to propagate and wherein the propagating crack does not intersect a leading edge of the glass ribbon.

12. The method according to any one of claims 8-11, further comprising forming a cross score (104) in the glass ribbon that is perpendicular to the direction of travel of the moving glass ribbon.

13. The method according to any one of claims 8 - 12, further comprising applying an edge tape (80) to the quality portion (70) of the glass ribbon.

14. The method according to any one of claims 8 - 13, wherein the edge portion (55) is not adjacent to the quality portion (70) of the glass ribbon over substantially an entire length of the edge portion.

15. The method according to any one of claims 8 - 14, wherein the moving glass ribbon is supplied from a glass forming apparatus.

## Patentansprüche

1. Vorrichtung zum Trimmen eines sich bewegenden Glasbandes, umfassend einen Qualitätsabschnitt (70) und einen Randabschnitt (55) neben dem Qualitätsabschnitt, wobei die Vorrichtung Folgendes umfasst:
einen Stützkörper (16) zum Stützen des sich bewegenden Glasbandes, wobei der Stützkörper eine obere Fläche (38) umfasst, die eine Vielzahl von Öffnungen zum Emittieren eines Gases definiert;
ein Schneidegerät (20), das konfiguriert ist, um den Randabschnitt von einem Qualitätsabschnitt des sich bewegenden Glasbandes zu trennen, wobei sich der Qualitätsabschnitt nach der Trennung einen ersten Weg entlang bewegt;
und
eine Umgehungsvorrichtung (18), die konfiguriert ist, um den abgetrennten Randabschnitt einen zweiten Weg entlang zu führen, der sich vom ersten Weg unterscheidet, wobei der Randabschnitt mit dem sich bewegenden Glasband verbunden bleibt;
**gekennzeichnet durch**:
ein Kreuzkerbengerät (30), das angeordnet ist, um eine Kerbe im Qualitätsabschnitt in eine Richtung senkrecht zu einer Bewegungsrichtung des Qualitätsabschnittes zu bilden; und
eine Brechvorrichtung (32), die konfiguriert ist, um eine Zugspannung über die Kerbe herzustellen;
wobei das Schneidegerät (20) ein erstes Ritzgerät (22) umfasst, das eine Rolle (46) umfasst, die angeordnete Linien eines Schleifmaterials (48) umfasst, die eine Vielzahl von Mängeln an dem sich bewegenden Glasband herstellen.

2. Vorrichtung nach Anspruch 1, wobei der Stützkörper (16) eine bogenförmige obere Fläche (38) umfasst.

3. Vorrichtung nach Anspruch 1 oder Anspruch 2, wobei das Schneidegerät (20) ein erstes Ritzgerät (22), einen Laser (24) und eine Fluiddüse (26), die konfiguriert ist, um ein Kühlfluid zu emittieren, umfasst.

4. Vorrichtung nach einem der Ansprüche 1-3, weiter umfassend eine Plattform (28) zum Stützen des Qualitätsabschnittes entlang des ersten Weges, wobei die Plattform (28) nach dem Stützkörper (16) relativ zur Bewegungsrichtung des sich bewegenden Glasbandes positioniert ist und eine Vielzahl von Öffnungen zum Emittieren eines Gases, das das Glasband stützt, umfasst.

5. Vorrichtung nach einem der Ansprüche 1-4, weiter umfassend eine Klebevorrichtung (78), um ein Klebeband (80) an einem Rand des Qualitätsabschnittes (70) aufzutragen.

6. Vorrichtung nach einem der Ansprüche 1-5, wobei die Brechvorrichtung (32) eine Vielzahl von Biegerollen (62, 64, 66) umfasst, wobei jede Biegerolle aus der Vielzahl von Biegerollen eine Längsdrehachse aufweist und wobei jede der Längsdrehachsen zu einer anderen Längsdrehachse parallel und senkrecht zur Bewegungsrichtung ist.

7. Vorrichtung nach einem der Ansprüche 1-6, wobei das Kreuzkerbengerät einen Schwungarm, einen an ein erstes Ende des Schwungarms gekoppelten Motor und ein an ein zweites Ende des Schwungarms gekoppeltes Kerbenelement umfasst und wobei der Schwungarm, wenn der Motor aktiviert ist, das Kerbenelement durch einen Bogen senkrecht zur Bewegungsrichtung bewegt.

8. Verfahren zum Trimmen eines sich bewegenden Glasbandes, umfassend einen Qualitätsabschnitt (70) und einen Randabschnitt (50), wobei das Verfahren die folgenden Schritte umfasst:
Liefern des sich bewegenden Glasbandes zu einer Trimmvorrichtung, wobei sich das sich bewegende Glasband einen ersten Weg entlang durch die Trimmvorrichtung bewegt;
Stützen des sich bewegenden Glasbandes über einem Stützkörper (16), der eine obere Fläche (38) aufweist, die eine Vielzahl von Öffnungen definiert, aus denen ein Gas emittiert wird, das das Glasband über der oberen Fläche schweben lässt;
Kontaktieren des Randabschnittes (55) des Glasbandes mit einer Rolle (46) eines Ritzgerätes (22), wodurch ein Mängelbereich gebildet wird, der sich in einer Breitrichtung innerhalb des Randabschnittes (55) des Bandes erstreckt, wobei der Mängelbereich eine Vielzahl von Mängeln am Randabschnitt des Glases umfasst;
Bilden eines Spalts (52) in dem sich bewegenden Glasband, wobei der Spalt durch eine Dicke des sich bewegenden Glasbandes in eine Richtung gegenüber einer Bewegungsrichtung des sich bewegenden Glasbandes propagiert, um den Randabschnitt (55) von einem Qualitätsabschnitt (70) des sich bewegenden Glasbandes zu trennen, wobei der Qualitätsabschnitt einem ersten Weg folgt;
Umleiten des Randabschnittes (55) entlang eines zweiten Weges, der sich vom ersten Weg unterscheidet, während der Spalt entlang einer Länge des Glasbandes propagiert; und
wobei der Randabschnitt (55) an dem Glasband angebracht bleibt, während der Randabschnitt umgeleitet wird.

9. Verfahren nach Anspruch 8, wobei die obere Fläche (38) einen bogenförmigen Abschnitt umfasst.

10. Verfahren nach Anspruch 8 oder Anspruch 9, wobei der Spalt (52) in einem zuvor festgelegten Abstand von einem Rand des sich bewegenden Glasbandes beabstandet ist.

11. Verfahren nach einem der Ansprüche 8-10, wobei das Bilden des Spalts (52) das Bilden einer vom Rand beabstandeten Kerbe, das Kreuzen der Kerbe mit einem Laserstrahl, um einen Bereich des Glasbandes zu erwärmen, das Kontaktieren des erwärmten Bereichs des Glasbereichs mit einem Kühlfluid, das bewirkt, dass ein Spalt propagiert und wobei der propagierende Spalt keine Vorderkante des Glasbandes kreuzt, umfasst.

12. Verfahren nach einem der Ansprüche 8-11, weiter umfassend das Bilden einer Kreuzkerbe (104) in dem Glasband, die senkrecht zur Bewegungsrichtung des sich bewegenden Glasbandes ist.

13. Verfahren nach einem der Ansprüche 8-12, weiter umfassend das Anbringen eines Randklebebandes (80) an dem Qualitätsabschnitt (70) des Glasbandes.

14. Verfahren nach einem der Ansprüche 8-13, wobei sich der Randabschnitt (55) über im Wesentlichen eine vollständige Länge des Randabschnittes nicht neben dem Qualitätsabschnitt (70) des Glasbandes befindet.

15. Verfahren nach einem der Ansprüche 8-14, wobei das sich bewegende Glasband von einer Glasbildungsvorrichtung geliefert wird.

## Revendications

1. Appareil d'ébavurage d'un ruban en verre en mouvement comprenant une partie de qualité (70) et une partie de bord (55) adjacente à la partie de qualité, l'appareil comprenant :
un corps (16) de support servant à supporter le ruban en verre en mouvement, le corps de support comprenant une surface supérieure (38) définissant plusieurs orifices permettant l'émission d'un gaz ;
un dispositif de coupe (20) conçu pour séparer la partie de bord de la partie de qualité du ruban en verre en mouvement, la partie de qualité se déplaçant suivant un premier trajet après la séparation ; et
un appareil de dérivation (18) conçu pour guider la partie de bord séparée le long d'un second trajet différent du premier trajet, la partie de bord demeurant reliée au ruban en verre en mouvement ;
**caractérisé par** :
un dispositif de formation de trait de coupe transversale (30) disposé pour former un trait de coupe dans la partie de qualité dans une direction perpendiculaire à un sens de déplacement de la partie de qualité ; et
un appareil de rupture (32) conçu pour produire une contrainte de traction d'un bout à l'autre du trait de coupe ;
dans lequel le dispositif de coupe (20) comprend un premier dispositif de rainurage (22) comprenant un rouleau (46) comportant des lignes groupées d'un matériau abrasif (48) qui produisent plusieurs brèches dans le ruban en verre en mouvement.

2. Appareil selon la revendication 1, dans lequel le corps (16) de support comprend une surface supérieure arquée (38).

3. Appareil selon la revendication 1 ou la revendication 2, dans lequel le dispositif de coupe (20) comprend un premier dispositif de rainurage (22), un laser (24) et une buse de fluide (26) conçue pour délivrer un fluide de refroidissement.

4. Appareil selon l'une quelconque des revendications 1 à 3, comprenant en outre une plate-forme (28) destinée à supporter la partie de qualité le long du premier trajet, la plate-forme (28) étant positionnée en aval du corps (16) de support par rapport au sens de déplacement du ruban en verre en mouvement et comprenant plusieurs orifices permettant l'émission d'un gaz qui supporte le ruban en verre.

5. Appareil selon l'une quelconque des revendications 1 à 4, comprenant en outre un appareil (78) d'application de petit coup destiné à appliquer un petit coup (80) à un bord de la partie de qualité (70).

6. Appareil selon l'une quelconque des revendications 1 à 5, dans lequel l'appareil de rupture (32) comprend plusieurs rouleaux de flexion (62, 64, 66), chaque rouleau de flexion des plusieurs rouleaux de flexion ayant un axe de rotation longitudinal, et dans lequel chacun des axes de rotation longitudinaux est parallèle à un autre axe de rotation longitudinal et perpendiculaire au sens de déplacement.

7. Appareil selon l'une quelconque des revendications 1 à 6, dans lequel le dispositif de formation de trait de coupe transversale comprend un bras oscillant, un moteur couplé à une première extrémité du bras oscillant et un élément de formation de trait de coupe couplé à une seconde extrémité du bras oscillant, et dans lequel, lors de l'activation du moteur, le bras oscillant déplace l'élément de formation de trait de coupe sur un arc perpendiculaire au sens de déplacement.

8. Procédé d'ébavurage d'un ruban en verre en mouvement comprenant une partie de qualité (70) et une partie de bord (50), le procédé comprenant les étapes consistant à :
amener le ruban en verre en mouvement vers un appareil d'ébavurage, le ruban en verre en mouvement passant dans l'appareil d'ébavurage le long d'un premier trajet ;
supporter le ruban en verre en mouvement sur un corps (16) de support comportant une surface supérieure (38) définissant plusieurs orifices à partir desquels un gaz est émis de façon à assurer la suspension du ruban en verre au-dessus de la surface supérieure ;
mettre en contact la partie de bord (55) du ruban en verre avec un rouleau (46) d'un dispositif de rainurage (22), ce qui permet de former une région de brèches s'étendant dans le sens de la largeur à l'intérieur de la partie de bord (55) du ruban, la région de brèches comprenant plusieurs brèches dans la partie de bord du verre ;
former une fissure (52) dans le ruban en verre en mouvement, la fissure se propageant à travers une épaisseur du ruban en verre en mouvement dans un sens opposé au sens de déplacement du ruban en verre en mouvement de façon à séparer la partie de bord (55) d'une partie de qualité (70) du ruban en verre en mouvement, la partie de qualité suivant un premier trajet ;
dévier la partie de bord (55) le long d'un second trajet différent du premier trajet lorsque la fissure se propage sur une longueur du ruban en verre ; et
dans lequel la partie de bord (55) demeure reliée au ruban en verre lors de la déviation de la partie de bord.

9. Procédé selon la revendication 8, dans lequel la surface supérieure (38) comprend une partie arquée.

10. Procédé selon la revendication 8 ou la revendication 9, dans lequel la fissure (52) est espacée d'une distance prédéterminée d'un bord du ruban en verre en mouvement.

11. Procédé selon l'une quelconque des revendications 8 à 10, dans lequel la formation de la fissure (52) comprend la formation d'un trait de coupe espacé du bord, le fait de soumettre le trait de coupe à un faisceau laser pour chauffer une région du ruban en verre, la mise en contact de la région chauffée de la région de verre avec un fluide de refroidissement qui amène une fissure à se propager, et dans lequel la propagation de la fissure ne rencontre pas un bord de tête du ruban en verre.

12. Procédé selon l'une quelconque des revendications 8 à 11, comprenant en outre la formation d'un trait de coupe transversal (104) dans le ruban en verre perpendiculairement au sens de déplacement du ruban en verre en mouvement.

13. Procédé selon l'une quelconque des revendications 8 à 12, comprenant en outre l'application d'un petit coup (80) au bord de la partie de qualité (70) du ruban en verre.

14. Procédé selon l'une quelconque des revendications 8 à 13, dans lequel la partie de bord (55) n'est pas adjacente à la partie de qualité (70) du ruban en verre sur sensiblement toute une longueur de la partie de bord.

15. Procédé selon l'une quelconque des revendications 8 à 14, dans lequel le ruban en verre en mouvement est délivré par un appareil de formation de verre.
